# FASCICULE DE BREVET EUROPEEN

(11) **EP 1 566 128 B1**
(45) Date de publication et mention de la délivrance du brevet: **11.10.2006**
(21) Numéro de dépôt: 05290375.4
(22) Date de dépôt: 18.02.2005
(51) Int. Cl.: A47J 36/10

(54) **Appareil électroménager à panneaux articulés**
Haushaltsgerät aus scharnierartig verbundenen Rostelementen
Domestic appliance consisting of hinged sections

(30) Priorité: 23.02.2004 FR 0401782
(43) Date de publication de la demande: 24.08.2005
(73) Titulaire: SEB SA, 69130 Ecully (FR)
(72) Inventeur: Tranchant, Jérome, 74000 Annecy (FR)
(74) Mandataire: Pichat, Thierry

(56) Documents cités:
- EP-A- 0 787 453
- WO-A-02/24043
- FR-A- 2 790 932
- US-A- 3 180 157
- US-A- 5 419 305

## Description

La présente invention concerne un appareil électroménager comportant deux panneaux articulés entre eux entre une position ouverte et une position fermée, du type gaufrier, grille-viande, croque-madeleine, appareils à sandwich, appareils à croque-monsieur, etc...

On connaît un appareil électroménager du type comprenant :
- deux panneaux articulés entre eux entre une position ouverte et une position fermée et sollicités vers leur position ouverte,
- un verrou mobile entre une position de verrouillage dans laquelle il maintient les panneaux en position fermée, et une position de déverrouillage, et
- un organe de commande mobile entre une position de début de décompte de temps et une position d'arrêt, sollicité vers sa position d'arrêt par un élément d'entraînement, et coopérant avec le verrou de sorte que, quand l'organe de commande est entre sa position de début de décompte de temps et une position de fin de décompte de temps située entre la position de début de décompte de temps et la position d'arrêt, le verrou est dans sa position de verrouillage, et quand l'organe de commande est entre sa position de fin de décompte de temps et une position d'activation située entre la position de fin de décompte de temps et la position d'arrêt, le verrou est entraîné vers sa position de déverrouillage.

Un tel appareil est ainsi décrit dans le document FR-A-2790932.

Toutefois, selon un tel appareil, il est nécessaire d'avoir un verrou additionnel qui est mobile entre une position de verrouillage dans laquelle il maintient les panneaux en position fermée, et une position de déverrouillage, afin de pouvoir ranger l'appareil en position fermée (quand l'appareil est rangé, l'organe de commande est en effet dans sa position d'arrêt suite à la sollicitation de l'élément d'entraînement.

La présente invention vise à réaliser un appareil du type précité ne comportant qu'un seul verrou qui puisse servir non seulement pour maintenir les deux panneaux en position fermée pendant une opération de cuisson (quand l'organe de commande est entre sa position de début de décompte et sa position de fin de décompte), mais aussi quand il est rangé.

Selon l'invention, l'appareil du type précité comprend un organe de blocage mobile entre une position d'ouverture automatique et une position d'ouverture manuelle, coopérant avec l'organe de commande de sorte que, quand l'organe de commande est entraîné de sa position de début de décompte de temps vers sa position d'arrêt, lorsque l'organe de blocage est dans sa position d'ouverture automatique, l'organe de commande est mobile jusqu'à sa position d'activation, et lorsque l'organe de blocage est dans sa position d'ouverture manuelle, l'organe de commande est mobile jusqu'à une position de repos dans laquelle le verrou est dans sa position de verrouillage.

Ainsi, l'organe de blocage permet de modifier l'amplitude du mouvement de l'organe de commande. Quand l'organe de blocage est en position d'ouverture automatique, l'appareil peut être utilisé pour la cuisson d'un aliment : l'utilisateur peut entraîner l'organe de commande vers une position de début de décompte de temps (qui correspond à un temps de cuisson) et une fois le temps écoulé, l'organe de commande est en position d'activation dans laquelle le verrou est en position de déverrouillage permettant l'ouverture automatique des panneaux. Quand l'organe de blocage est en position d'ouverture manuelle, l'appareil peut être rangé avec les deux panneaux en position fermée : l'organe de commande, sollicité par l'élément d'entraînement s'arrête dans sa position de repos dans laquelle le verrou est en position de verrouillage maintenant les deux panneaux en position fermée.

Ainsi, selon l'invention, l'appareil ne comprend qu'un seul verrou qui est utilisé aussi bien pour la fermeture de l'appareil quand il est rangé que pour sa fermeture pendant une opération de cuisson et son ouverture automatique à la fin du temps de cuisson.

D'autres particularités et avantages de la présente invention apparaîtront dans la description détaillée de deux mode de réalisation donnés à titre d'exemples non limitatifs et illustrés dans les dessins mis en annexe.
La figure 1 est une vue en perspective écorchée d'un appareil conforme au premier mode de réalisation de la présente invention ;
La figure 2 est une vue agrandie de la figure 1 illustrant la coopération entre l'organe de commande, le verrou et l'organe de blocage du premier mode de réalisation ;
La figure 3 est une vue similaire à la figure 1 représentant un appareil conforme au second mode de réalisation de la présente invention ;
La figure 4 est une vue représentant l'organe de commande, le verrou et l'organe de blocage du second mode de réalisation ;
La figure 5 est une vue en perspective éclatée d'une minuterie utilisée dans l'appareil ; et
La figure 6 est une vue en coupe d'un amortisseur à graisse utilisé dans une minuterie.

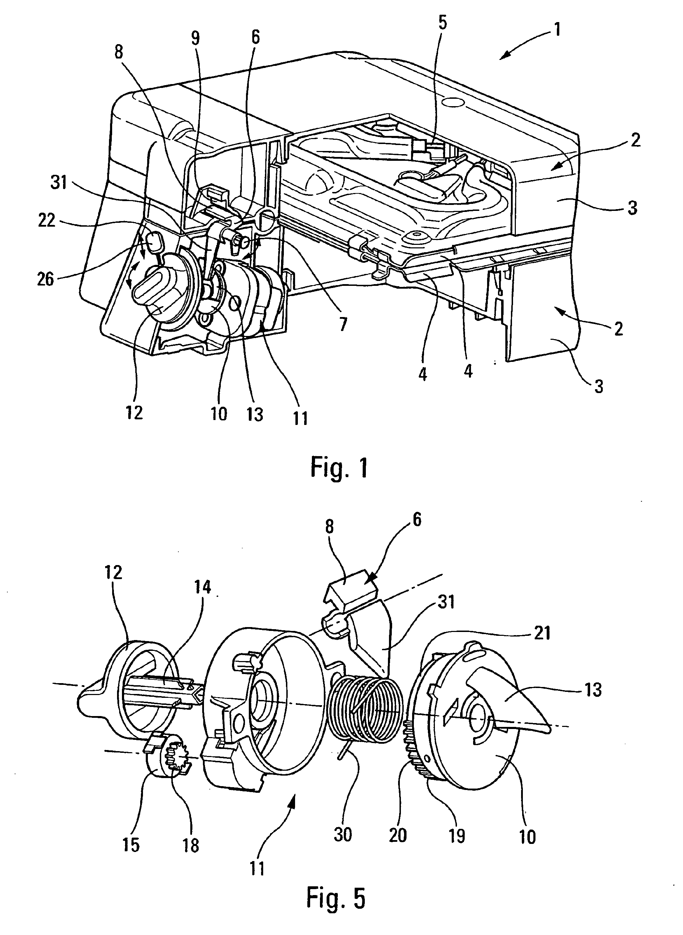

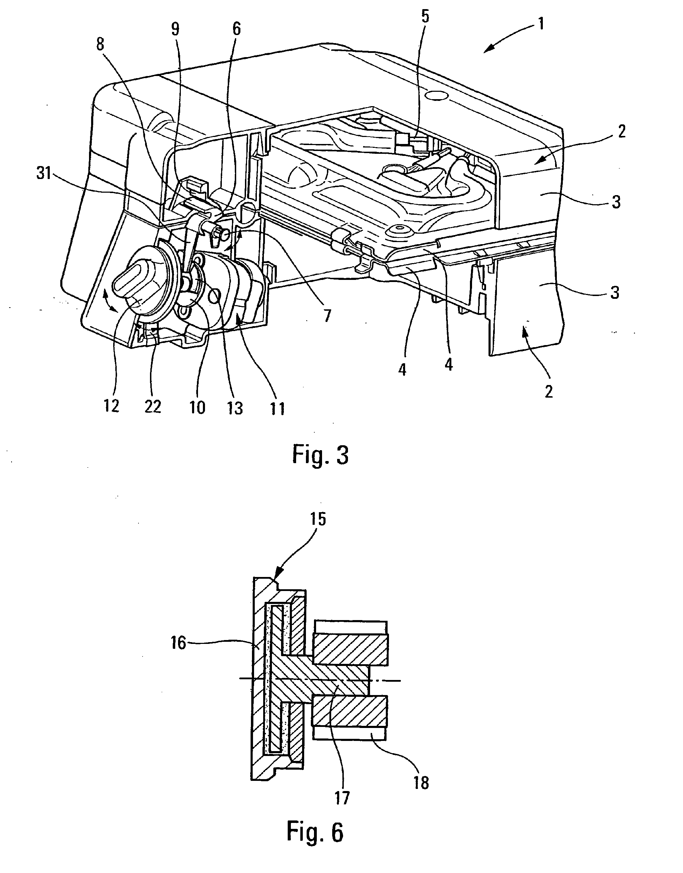

Comme on peut le voir aux figures 1 et 3, l'appareil électroménager 1 (en l'occurrence un gaufrier) comprend deux panneaux 2. Chaque panneau 2 comprend une coque 3 formant le corps du panneau 2, une plaque de cuisson 4 solidarisée à la coque 3 et adaptée à recevoir un aliment à cuire, et une résistance électrique 5 fournissant à la plaque de cuisson 4 l'énergie nécessaire pour réaliser la cuisson.

Les deux panneaux 2 sont articulés l'un à l'autre par une charnière et sont mobiles entre une position ouverte permettant l'introduction d'un aliment (en l'occurrence de la pâte à gaufre) et le retrait de ce même aliment une fois cuit (en l'occurrence la gaufre), et une position fermée permettant la cuisson de l'aliment. Les deux panneaux 2 sont sollicités vers leur position ouverte par un ressort de torsion disposé au niveau de la charnière d'articulation.

L'appareil électroménager comprend également un verrou 6 qui est mobile entre une position de verrouillage et une position de déverrouillage. Quand il est en position de verrouillage, le verrou 6 maintient les deux panneaux 2 en position fermée. Par contre, quand il est en position de déverrouillage, les deux panneaux sont entraînés vers leur position ouverte sous l'action du ressort de torsion.

Dans les présents modes de réalisation, le verrou 6 est monté pivotant autour d'un arbre de pivotement 7 qui s'étend selon un axe de pivotement 7 et qui est porté par un des deux panneaux (en l'occurrence, le panneau inférieur). Dans les présents modes de réalisation, cet axe de pivotement est parallèle à l'axe de la charnière. De façon classique, le verrou 6 comprend, à une de ses extrémités, un crochet 8 qui est adapté à coopérer avec une fente 9 réalisée dans l'autre panneau (en l'occurrence, le panneau supérieur) de façon à pouvoir maintenir les deux panneaux 2 en position fermée.

Par ailleurs, dans les présents modes de réalisation, le verrou 6 est sollicité vers sa position de verrouillage par un ressort de torsion qui est disposé au niveau de l'arbre de pivotement 7.

L'appareil électroménager 1 comprend également un organe de commande 10 qui coopère avec le verrou 6. L'organe de commande 10 fait partie d'une minuterie 11 et est mobile entre une position de début de décompte de temps et une position d'arrêt. Il est sollicité vers sa position d'arrêt par un élément d'entraînement 30 (un ressort de torsion 30) qui fait aussi partie de la minuterie 11.

L'organe de commande 10 et le verrou 6 sont agencés l'un par rapport à l'autre de sorte que l'organe de commande 10 entraîne le verrou 6 en position de déverrouillage quand le temps sélectionné est écoulé.

Ainsi, quand l'organe de commande 10 est entre sa position de début de décompte de temps (sélectionné par l'utilisateur) et une position de fin de décompte de temps, le verrou 6 est dans sa position de verrouillage. La position de fin de décompte de temps est atteinte par l'organe de commande 10 quand le temps sélectionné par l'utilisateur est écoulé, la vitesse de déplacement de l'organe de commande 10 sollicité par l'élément d'entraînement 30 étant contrôlée par la minuterie 11. Cette position de fin de décompte de temps est située entre la position de début de décompte de temps et la position d'arrêt.

De plus, quand l'organe de commande 10 est entre sa position de fin de décompte de temps et une position d'activation, le verrou 6 est entraîné vers sa position de déverrouillage. Cette position de fin d'activation est située entre la position de fin de décompte de temps et la position d'arrêt.

Ainsi, quand un utilisateur veut cuire une gaufre, après avoir introduit la pâte entre les deux panneaux 2, il entraîne l'organe de commande 10 vers la position de début de décompte de temps qui correspond au temps de cuisson désiré et referme le panneau supérieur sur le panneau inférieur. L'organe de commande 10 est entraîné vers sa position de fin de décompte. Tant que cette position n'est pas atteinte, le verrou 6 est en position de verrouillage et les deux panneaux 2 restent en position fermée. Une fois la position de fin de décompte passée, l'élément d'entraînement 30 continu d'entraîner l'organe de commande 10 vers sa position d'arrêt et donc vers la position d'activation, ce qui a pour conséquence, l'entraînement du verrou 6 vers sa position de déverrouillage et l'ouverture automatique des deux panneaux 2.

Dans le présent mode de réalisation, afin de faciliter la manoeuvre de fermeture des panneaux, le crochet 8 du verrou 6 est conformé de sorte que, quand l'organe de commande 10 est dans une position permettant au verrou 6 d'être dans sa position de verrouillage, le crochet 8 s'encliquette dans la fente 9 lorsque les panneaux 2 sont entraînés vers leur position fermée.

De plus, afin de permettre l'entraînement de l'organe de commande 10 par l'utilisateur vers sa position de début de décompte de temps, l'organe de commande 10 comprend un bouton de commande manuelle 12.

En outre, l'organe de commande 10 comprend une surface de came 13 avec laquelle le verrou 6 est adapté à venir en contact. La surface de came 13 est conformée de façon à entraîner le verrou 6 (en l'occurrence une patte 31 portée par l'extrémité du verrou 6 opposée au crochet 8) de sa position de verrouillage à sa position de déverrouillage quand l'organe de commande 10 est entraîné de sa position de fin de décompte de temps à sa position d'activation.

Dans le présent exemple, l'organe de commande 10 est un disque monté rotatif autour d'un arbre de rotation 14 qui s'étend selon un axe de rotation perpendiculaire à l'axe de pivotement. Par ailleurs, le bouton de commande manuelle 12 est solidaire à l'organe de commande et est également monté rotatif autour de l'arbre de rotation 14.

L'appareil électroménager 1 comprend également un amortisseur 15 qui fait partie de la minuterie 11 et qui coopère avec l'organe de commande 10.

L'amortisseur 15 est couplé avec l'organe de commande 10 quand ce dernier est entraîné de sa position de début de décompte de temps jusqu'à sa position de fin de décompte de temps pour ralentir le mouvement de l'organe de commande 10 qui est sollicité par l'élément d'entraînement 30. En outre, l'amortisseur 15 est découplé de l'organe de commande 10 quand ce dernier est entraîné entre sa position de fin de décompte de temps jusqu'à sa position d'arrêt, et donc entre sa position de fin de décompte et sa position d'activation.

Comme on peut le voir à la figure 6, dans les présents modes de réalisation, l'amortisseur 15 est un amortisseur rotatif (tel que, à titre d'exemple, un amortisseur rotatif à graisse) comprenant une base 16 et un élément rotatif 17 qui est monté en rotation par rapport à la base 16 de façon à être soumis à des frottements pendant sa rotation.

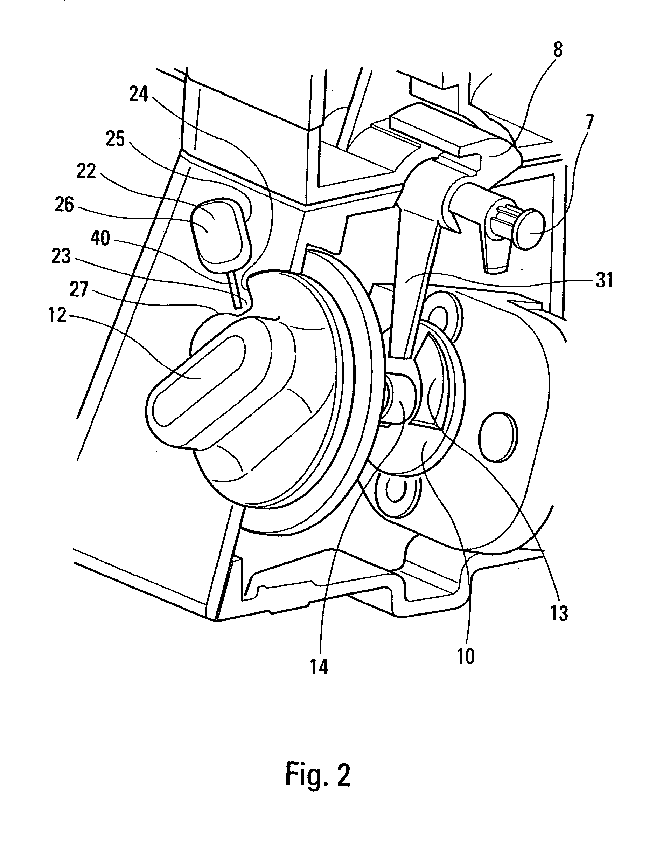

Comme on peut le voir à la figure 5, l'élément rotatif 17 est couplé en rotation à l'organe de commande 10 : l'élément rotatif 17 comprend un pignon 18, et l'organe de commande 10 comporte une couronne dentée 19 qui comprend un secteur angulaire denté 20 avec lequel le pignon 18 coopère par engrènement et un secteur angulaire lisse évidé 21 avec lequel le pignon 18 ne peut entrer en contact. Le pignon 18 est engrainé directement avec le secteur angulaire denté 20.

Ainsi, quand l'organe de commande 10 est entraîné par l'élément d'entraînement 30 entre sa position de début de décompte de temps à sa position de fin de décompte de temps, l'amortisseur 15 diminue la vitesse de rotation de l'organe de commande 10 de façon qu'elle corresponde aux indications portées sur l'appareil 1, et quand il est entraîné au-delà de cette position de fin de décompte de temps, l'amortisseur 15 est découplé de l'organe de commande 10 ce qui augmente sa vitesse de rotation. De cette façon, le temps séparant le moment où l'organe de commande 10 est en position de fin de décompte et celui où il est en position d'activation est très court, ce qui permet d'avoir une ouverture de l'appareil 1 juste après la réalisation de la cuisson.

L'appareil électroménager 1 comprend également un organe de blocage 22 qui coopère avec l'organe de commande 10. L'organe de blocage 22 est mobile entre une position d'ouverture automatique (utilisée lors des opérations de cuisson) et une position d'ouverture manuelle (utilisée pour le rangement de l'appareil).

L'amplitude de mouvement de l'organe de commande 10, quand il est entraîné de sa position de début de décompte de temps vers sa position d'arrêt, est différente selon la position de l'organe de blocage 22. Quand l'organe de blocage 22 est dans sa position d'ouverture automatique, l'organe de commande 10 est mobile jusqu'à sa position d'activation dans laquelle le verrou 6 est dans sa position de déverrouillage, et quand l'organe de blocage 22 est dans sa position d'ouverture manuelle, l'organe de commande 10 est mobile jusqu'à une position de repos dans laquelle le verrou 6 est dans sa position de verrouillage.

Dans le premier mode de réalisation, tel qu'illustré aux figures 1 et 2, l'amplitude de mouvement de l'organe de commande 10, quand il est entraîné de sa position de début de décompte de temps vers sa position d'arrêt, est plus faible quand l'organe de blocage 22 est dans sa position d'ouverture manuelle que quand il est dans sa position d'ouverture automatique.

Ainsi, quand l'organe de blocage 22 est dans sa position d'ouverture automatique, l'organe de commande 10 est mobile jusque dans sa position d'activation (qui est aussi sa position d'arrêt) et, quand l'organe de blocage 22 est dans sa position d'ouverture manuelle, l'organe de commande 10 est mobile jusque dans sa position de fin de décompte de temps (qui est aussi sa position de repos).

L'organe de commande 10, sous l'action de l'élément d'entraînement 30, vient en butée contre l'organe de blocage 22 qui est dans sa position d'ouverture manuelle, quand il est dans sa position de fin de décompte de temps.

De façon plus précise, l'organe de commande 10 est solidaire du bouton de commande manuelle 12 qui comprend un évidemment 23 qui est délimité notamment par une surface d'arrêt 24. Quand l'organe de blocage 22 est dans sa position d'ouverture automatique (tel qu'illustré à la figure 2), l'organe de blocage 22 ne peut venir en contact avec le bouton de commande manuelle 12. Quand l'organe de blocage 22 est dans sa position d'ouverture manuelle, il est logé dans l'évidemment 23, et sous l'action de l'élément d'entraînement, la surface d'arrêt 24 vient en butée contre une surface de butée 25 portée par l'organe de blocage 22.

L'organe de blocage 22 est stable dans sa position d'ouverture automatique et dans sa position d'ouverture manuelle, et il comprend un élément de commande manuelle 26 permettant à l'utilisateur de le manoeuvrer (en l'occurrence l'organe de blocage 22 est accessible de l'extérieur et forme ainsi l'élément de commande manuelle 26). Dans le présent exemple, l'élément de commande manuelle 26 est monté coulissant le long d'une rainure 40 réalisée dans le panneau portant l'organe de commande 10.

Quand l'utilisateur veut cuire un aliment, après avoir entraîné l'organe de commande 10 vers sa position de début de décompte de temps, il entraîne l'organe de blocage 22 dans sa position d'ouverture automatique. Ainsi, une fois le temps de cuisson écoulé, l'organe de commande 10 passe successivement à sa position de fin de décompte puis à sa position d'activation où le verrou 6 est dans sa position de déverrouillage.

Quand l'utilisateur veut ranger l'appareil de cuisson, il entraîne l'organe de commande 10 initialement en position d'activation au moins jusque dans sa position de fin de décompte et l'organe de blocage 22 jusque dans sa position d'ouverture manuelle. Ainsi, l'organe de commande 10 est immobilisé dans sa position de fin de décompte de temps dans lequel le verrou 6 est dans sa position de verrouillage. Il ne reste plus qu'à refermer le panneau supérieur sur la panneau inférieur.

Quand l'utilisateur veut utiliser l'appareil 1 (sorti de son rangement), il suffit d'entraîner l'organe de blocage 22 dans sa position d'ouverture automatique, l'organe de commande 10, sous l'action de l'élément d'entraînement 30, passe de sa position de fin de décompte à sa position d'activation, ce qui entraîne l'ouverture des deux panneaux 2.

Par ailleurs, dans le présent mode de réalisation, le bouton de commande manuelle 12 comprend une deuxième surface de came 27 avec laquelle l'organe de blocage 22 est adapté à venir en contact. La deuxième surface de came 27 est conformée de façon à entraîner l'organe de blocage 22 de sa position d'ouverture manuelle à sa position d'ouverture automatique quand l'organe de commande 10 est entraîné de sa position de repos (sa position de fin de décompte de temps) vers sa position de début de décompte de temps. La surface d'arrêt 24 forme l'une des extrémités de la deuxième surface de came 27.

Ainsi, quand l'utilisateur veut utiliser l'appareil 1 (sorti de son rangement), il suffit alors d'entraîner l'organe de commande 10 de sa position de fin de décompte vers sa position de début de décompte de temps, ce qui a pour conséquence d'entraîner l'organe de blocage 22 dans sa position d'ouverture automatique.

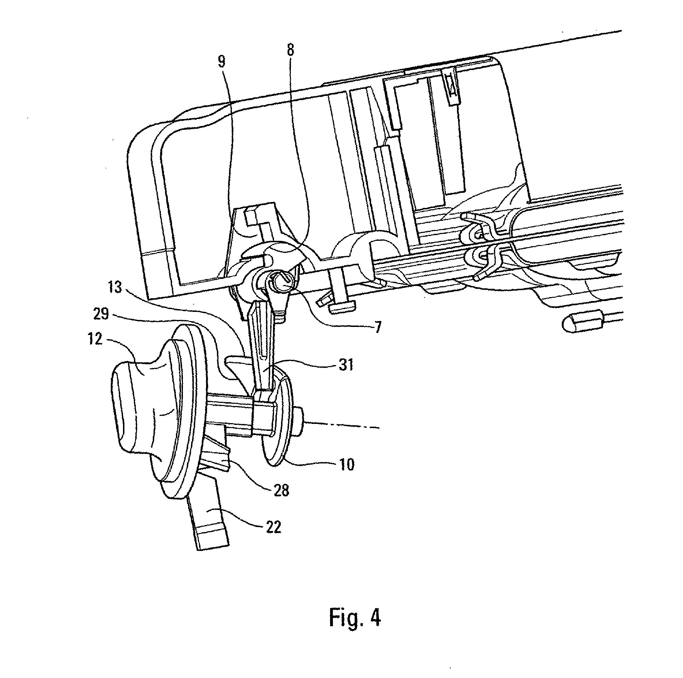

Dans le second mode de réalisation, tel qu'illustré aux figures 3 et 4, l'amplitude de mouvement de l'organe de commande 10, quand il est entraîné de sa position de début de décompte de temps vers sa position d'arrêt, est plus importante quand l'organe de blocage 22 est dans sa position d'ouverture manuelle que quand il est dans sa position d'ouverture automatique.

Ainsi, l'organe de blocage 22 est dans sa position d'ouverture automatique, l'organe de commande 10 est mobile jusque dans sa position d'activation, et, quand l'organe de blocage 22 est dans sa position d'ouverture manuelle, l'organe de commande 10 est mobile jusque dans sa position d'arrêt (qui est aussi sa position de repos).

Quand l'organe de blocage 10 est dans sa position d'ouverture automatique, il reçoit en butée un élément de butée 28 quand l'organe de commande 10, sollicité par l'élément d'entraînement, arrive dans sa position d'activation.

Dans le présent mode de réalisation, l'organe de blocage 22 est sollicité vers sa position d'ouverture automatique.

En outre, l'élément de butée 28 (en l'occurrence un ergot 28) est fixé à l'organe de commande 10 tandis que l'organe de blocage 22 (en l'occurrence une lame 22 élastiquement déformable) est porté par le panneau portant l'organe de commande 10.

Quand l'organe de blocage 22 (la lame 22) est dans sa position naturelle (sa position d'ouverture automatique), elle reçoit en butée l'élément de butée 28 (l'ergot 28) quand l'organe de commande 10 passe de sa position de début de décompte de temps à sa position d'activation. L'organe de blocage 22 est suffisamment rigide pour ne pas passer dans sa position d'ouverture manuelle malgré l'énergie qu'il reçoit lors de la mise en butée de l'élément de butée 28 contre lui (du à l'entraînement de l'organe de commande 10 par l'élément d'entraînement 30).

Par ailleurs, l'élément de butée 28 est adapté à entraîner l'organe de blocage 22 vers sa position d'ouverture manuelle quand l'organe de commande 10 est entraîné de sa position d'activation vers sa position d'arrêt par une énergie prédéterminée qui est supérieure à celle reçue par l'organe de blocage 22 lors de la mise en butée de l'élément de butée 28 sous la sollicitation de l'élément d'entraînement 30.

Dans le présent mode de réalisation, l'ergot 28 est adapté à déformer élastiquement la lame 22 jusqu'à ce qu'il ne soit plus en contact avec elle et que l'organe de commande 10 soit dans une position située entre la position d'activation et la position d'arrêt.

En outre, l'organe de commande 10 est conformé de sorte que, quand il est dans une position située au-delà de sa position d'activation, le verrou 6 est dans sa position de verrouillage.

Quand l'utilisateur veut cuire un aliment, il entraîne l'organe de commande 10 de sa position d'activation à sa position de début de décompte de temps. Une fois le temps de cuisson écoulé, l'élément de butée 28 porté par l'organe de commande 10 vient en butée contre la lame 22 (sans la faire passer dans sa position d'ouverture manuelle) dans sa position d'activation où le verrou 6 est dans sa position de déverrouillage.

Quand l'utilisateur veut ranger l'appareil 1, il entraîne l'organe de commande 10 initialement en position d'activation vers sa position d'arrêt, imposant, par l'intermédiaire du bouton de commande manuelle 12, une déformation à l'organe de blocage 22 jusqu'à ce que l'élément de butée 28 dépasse ce point dur. Une fois ce point passé, l'élément d'entraînement entraîne l'organe de commande 10 jusque dans sa position d'arrêt dans laquelle le verrou 6 est dans sa position de verrouillage. Il ne reste plus qu'à refermer le panneau supérieur sur la panneau inférieur.

En outre, dans le présent mode de réalisation, l'organe de commande 10 comprend une surface complémentaire de came 29 avec laquelle le verrou 6 est adapté à venir en contact. La surface complémentaire de came 29 est conformée de façon à entraîner le verrou 6 (en l'occurrence l'extrémité du verrou 6 opposée au crochet 8) de sa position de verrouillage à sa position de déverrouillage quand l'organe de commande 10 est entraîné de sa position d'arrêt à sa position d'activation.

Ainsi, quand l'utilisateur veut utiliser l'appareil (sorti de son rangement), il suffit alors d'entraîner l'organe de commande 10 de sa position d'arrêt vers sa position de fin de décompte de temps, ce qui a pour conséquence d'entraîner le verrou 6 de sa position de verrouillage à sa position de déverrouillage et de déformer la lame 22 pour permettre le franchissement du point dur. Une fois ce point dur franchi, la lame 22 se remet dans sa position d'ouverture automatique (non fléchie).

Par ailleurs, la surface complémentaire de came 29 prolonge la surface de came 13 de façon à ce que le verrou 6 ne butte pas contre un quelconque élément quand l'organe de commande 10 franchit la position d'activation dans un sens comme dans l'autre.

Dans un appareil électroménager dont la coopération entre l'organe de commande et l'organe de blocage correspond à celle du premier mode de réalisation (avec un organe de commande 10 ayant une amplitude de mouvement plus faible quand l'organe de blocage 22 est dans sa position d'ouverture manuelle que quand il est dans sa position d'ouverture automatique), il serait possible d'utiliser un organe de blocage 22 situé à l'intérieur du panneau sur lequel est monté l'organe de commande 10, l'organe de blocage 22 coopérant directement avec l'organe de commande 10 (qui de ce fait comporterait l'évidemment 23, la surface d'arrêt 24 et, le cas échéant la deuxième surface de came 27), l'élément de commande manuelle 26 étant alors la seule partie de l'organe de blocage 22 situé à l'extérieur du panneau.

Dans un appareil électroménager dont la coopération entre l'organe de commande 10 et l'organe de blocage 22 correspond à celle du second mode de réalisation (un organe de commande 10 ayant une amplitude de mouvement plus importante quand l'organe de blocage 22 est dans sa position d'ouverture manuelle que quand il est dans sa position d'ouverture automatique), il serait possible :
- d'utiliser un organe de blocage stable dans sa position d'ouverture automatique et dans sa position d'ouverture manuelle (tel que celui utilisé dans le premier mode de réalisation) ; l'organe de blocage pourrait alors comprendre un élément de commande manuelle permettant de le manoeuvrer ; de même l'organe de commande pourrait comprendre une deuxième surface de came permettant d'entraîner l'organe de blocage de sa position d'ouverture manuelle à sa position d'ouverture automatique quand l'organe de commande est entraîné de sa position de repos vers sa position de début de décompte de temps.
- d'utiliser, comme organe de blocage, un bouton qui serait monté coulissant le long d'une rainure réalisée dans le panneau sur lequel est monté l'organe de commande, et qui serait sollicité dans sa position d'ouverture automatique par un moyen de rappel (tel q'un ressort) suffisamment résistant pour empêcher que le bouton passe dans sa position d'ouverture manuelle suite à l'énergie reçue lors de la mise en butée de l'élément de butée.
- que l'organe de blocage (par exemple une lame déformable ou un bouton) soit fixé à l'organe de commande, l'élément de butée étant alors porté par le panneau portant l'organe de commande.

## Revendications

1. Appareil électroménager (1) comprenant :
- deux panneaux (2) articulés entre eux entre une position ouverte et une position fermée et naturellement sollicités vers leur position ouverte,
- un verrou (6) mobile entre une position de déverrouillage et une position de verrouillage dans laquelle le verrou (6) maintient les panneaux (2) en position fermée, et
- un organe de commande (10) mobile entre une position de début de décompte de temps et une position d'arrêt, naturellement sollicité vers sa position d'arrêt par un élément d'entraînement (30), et coopérant avec le verrou (6) de sorte que, quand l'organe de commande (10) est entre sa position de début de décompte de temps et une position de fin de décompte de temps qui est située entre la position de début de décompte de temps et la position d'arrêt, le verrou (6) est dans sa position de verrouillage, et quand l'organe de commande (10) est entre sa position de fin de décompte de temps et une position d'activation qui est située entre la position de fin de décompte de temps et la position d'arrêt, le verrou (6) est entraîné vers sa position de déverrouillage,
**caractérisé en ce qu**'il comprend un organe de blocage (22) mobile entre une position d'ouverture automatique et une position d'ouverture manuelle, coopérant avec l'organe de commande (10) de sorte que, quand l'organe de commande (10) est entraîné de sa position de début de décompte de temps vers sa position d'arrêt, lorsque l'organe de blocage (22) est dans sa position d'ouverture automatique, l'organe de commande (10) est mobile jusqu'à sa position d'activation, et lorsque l'organe de blocage (22) est dans sa position d'ouverture manuelle, l'organe de commande (10) est mobile jusqu'à une position de repos dans laquelle le verrou (6) est dans sa position de verrouillage.

2. Appareil électroménager (1) selon l'une des revendication 1, **caractérisé en ce que** l'organe de commande (10) comprend une surface de came (13) avec laquelle le verrou (6) est adapté à venir en contact, la surface de came (13) étant conformée de façon à entraîner le verrou (6) de sa position de verrouillage à sa position de déverrouillage quand l'organe de commande (10) est entraîné de sa position de fin de décompte de temps à sa position d'activation.

3. Appareil électroménager (1) selon la revendication 1 ou 2, **caractérisé en ce que** l'organe de blocage (22) est stable dans sa position d'ouverture automatique et dans sa position d'ouverture manuelle.

4. Appareil électroménager (1) selon la revendication 3, **caractérisé en ce que** l'organe de blocage (22) comprend un élément de commande manuelle (26) permettant de le manoeuvrer.

5. Appareil électroménager (1) selon l'une des revendications 1 à 4, **caractérisé en ce que** l'organe de commande (10) comprend une deuxième surface de came (27) avec laquelle l'organe de blocage (22) est adapté à venir en contact, la deuxième surface de came (27) étant conformée de façon à entraîner l'organe de blocage (22) de sa position d'ouverture manuelle à sa position d'ouverture automatique quand l'organe de commande (10) est entraîné de sa position de repos vers sa position de début de décompte de temps.

6. Appareil électroménager (1) selon la revendication 5 **caractérisé en ce qu**'une extrémité de la deuxième surface de came (27) forme une surface d'arrêt (24) venant en contact avec l'organe de blocage (22) en position d'ouverture manuelle quand l'organe de commande (10) est en position de repos.

7. Appareil électroménager (1) selon la revendication 1 ou 2, **caractérisé en ce que** l'organe de blocage (22) est sollicité vers sa position d'ouverture automatique.

8. Appareil électroménager (1) selon l'une des revendications 1 à 7, **caractérisé en ce que** l'organe de blocage (22) est monté coulissant le long d'une rainure réalisée dans le panneau (2) sur lequel est monté l'organe de commande (10).

9. Appareil électroménager (1) selon la revendication 7, **caractérisé en ce que** l'organe de blocage (22) est une lame (22) déformable élastiquement.

10. Appareil électroménager (1) selon la revendication 3 ou l'une des revendications qui en dépend, **caractérisé en ce que**, quand l'organe de blocage (22) est dans sa position d'ouverture automatique, l'organe de commande (10) est mobile jusque dans sa position d'activation qui est sa position d'arrêt, et, quand l'organe de blocage (22) est dans sa position d'ouverture manuelle, l'organe de commande (10) est mobile jusque dans sa position de repos qui est sa position de fin de décompte de temps.

11. Appareil électroménager (1) selon la revendication 10, **caractérisé en ce que**, quand l'organe de blocage (22) est dans sa position d'ouverture manuelle, il reçoit en butée l'organe de commande (10) quand ce dernier est dans sa position de fin de décompte de temps.

12. Appareil électroménager (1) selon l'une des revendications 1 à 9, **caractérisé en ce que**, quand l'organe de blocage (22) est dans sa position d'ouverture automatique, l'organe de commande (10) est mobile jusque dans sa position d'activation, et, quand l'organe de blocage (22) est dans sa position d'ouverture manuelle, l'organe de commande (10) est mobile jusque dans sa position de repos qui est sa position d'arrêt.

13. Appareil électroménager (1) selon la revendication 12, **caractérisé en ce que**, quand l'organe de blocage (22) est dans sa position d'ouverture automatique, il reçoit en butée un élément de butée (28) quand l'organe de commande (10) est dans sa position d'activation.

14. Appareil électroménager (1) selon la revendication 13, **caractérisé en ce que** l'élément de butée (28) est adapté à entraîner l'organe de blocage (22) vers sa position d'ouverture manuelle quand l'organe de commande (10) est entraîné de sa position d'activation vers sa position d'arrêt par une énergie prédéterminée qui est supérieure à celle reçue par l'organe de blocage (22) quand l'organe de commande (10), sollicité par l'élément d'entraînement (30), vient en butée dans sa position d'activation.

15. Appareil électroménager (1) selon la revendication 13 ou 14, **caractérisé en ce que** l'élément de butée (28) est fixé à l'organe de commande (10), l'organe de blocage (22) étant porté au panneau portant l'organe de commande (10).

16. Appareil électroménager (1) selon l'une des revendications 12 à 15, **caractérisé en ce que** l'organe de commande (10) comprend une surface complémentaire de came (29) avec laquelle le verrou (6) est adapté à venir en contact, et qui est conformée de façon à entraîner le verrou (6) de sa position de verrouillage à sa position de déverrouillage quand l'organe de commande (10) est entraîné de sa position d'arrêt vers sa position d'activation.

17. Appareil électroménager (1) selon la revendication 16, **caractérisé en ce que** la surface complémentaire de came (29) prolonge la surface de came (13) au-delà de la position d'activation, vers la position d'arrêt.

## Claims

1. Domestic appliance (1) comprising:
- two sections (2) hinged together to allow movement between an open position and a closed position and naturally subjected to an opening force,
- a lock (6) movable between an unlocked position and a locked position, in which latter the lock (6) keeps the sections (2) in the closed position, and
- a control member (10) that is movable between a start-of-countdown position and a stop position and that is naturally subjected to a force in the direction of its stop position by a drive component (30), and that acts on the lock (6) in such a way that, when the control member (10) is between its start-of-countdown position and an end-of-countdown position, which latter is situated between the start-of-countdown position and the stop position, the lock (6) is in its locked position, and when the control member (10) is between its end-of-countdown position and an activation position, which latter is situated between the end-of-countdown position and the stop position, the lock (6) is moved towards its unlocked position, **characterized in that** it comprises a latch member (22) that is movable between an automatic-opening position and a manual-opening position, engaging with the control member (10) in such a way that, when the control member (10) is moved from its start-of-countdown position towards its stop position, when the latch member (22) is in its automatic-opening position, the control member (10) is movable to its activation position, and when the latch member (22) is in its manual-opening position, the control member (10) is movable to a rest position in which the lock (6) is in its locked position.

2. Domestic appliance (1) according to Claim 1, **characterized in that** the control member (10) comprises a cam surface (13) with which the lock (6) is able to come into contact, the cam surface (13) being shaped in such a way as to move the lock (6) from its locked position to its unlocked position when the control member (10) is moved from its end-of-countdown position to its activation position.

3. Domestic appliance (1) according to Claim 1 or 2, **characterized in that** the latch member (22) is stable in its automatic-opening position and in its manual-opening position.

4. Domestic appliance (1) according to Claim 3, **characterized in that** the latch member (22) comprises a manual control component (26) allowing it to be operated.

5. Domestic appliance (1) according to one of Claims 1 to 4, **characterized in that** the control member (10) comprises a second cam surface (27) with which the latch member (22) is able to come into contact, the second cam surface (27) being shaped in such a way as to move the latch member (22) from its manual-opening position to its automatic-opening position when the control member (10) is moved from its rest position towards its start-of-countdown position.

6. Domestic appliance (1) according to Claim 5, **characterized in that** one end of the second cam surface (27) forms a stop surface (24) which comes into contact with the latch member (22) in the manual-opening position when the control member (10) is in the rest position.

7. Domestic appliance (1) according to Claim 1 or 2, **characterized in that** the latch member (22) is subjected to a force acting in the direction of its automatic-opening position.

8. Domestic appliance (1) according to one of Claims 1 to 7, **characterized in that** the latch member (22) is mounted in such a way that it can slide along a groove formed in the section (2) on which the control member (10) is mounted.

9. Domestic appliance (1) according to Claim 7, **characterized in that** the latch member (22) is an elastically deformable blade (22).

10. Domestic appliance (1) according to Claim 3 or one of its dependent claims, **characterized in that**, when the latch member (22) is in its automatic-opening position, the control member (10) is movable to its activation position which is its stop position, and, when the latch member (22) is in its manual-opening position, the control member (10) is movable to its rest position which is its end-of-countdown position.

11. Domestic appliance (1) according to Claim 10, **characterized in that**, when the latch member (22) is in its manual-opening position, it stops the control member (10) when the latter is in its end-of-countdown position.

12. Domestic appliance (1) according to one of Claims 1 to 9, **characterized in that**, when the latch member (22) is in its automatic-opening position, the control member (10) is movable to its activation position, and, when the latch member (22) is in its manual-opening position, the control member (10) is movable to its rest position which is its stop position.

13. Domestic appliance (1) according to Claim 12, **characterized in that**, when the latch member (22) is in its automatic-opening position, it stops a stop component (28) when the control member (10) is in its activation position.

14. Domestic appliance (1) according to Claim 13, **characterized in that** the stop component (28) is designed to move the latch member (22) towards its manual-opening position when the control member (10) is moved from its activation position towards its stop position by a predetermined amount of energy that is greater than the amount received by the latch member (22) when the control member (10), subjected to a force from the drive component (30), is stopped in its activation position.

15. Domestic appliance (1) according to Claim 13 or 14, **characterized in that** the stop component (28) is fixed to the control member (10), the latch member (22) being carried by the section on which the control member (10) is mounted.

16. Domestic appliance (1) according to one of Claims 12 to 15, **characterized in that** the control member (10) comprises a complementary cam surface (29) with which the lock (6) is designed to come into contact, and which is shaped in such a way as to move the lock (6) from its locked position to its unlocked position when the control member (10) is moved from its stop position towards its activation position.

17. Domestic appliance (1) according to Claim 16, **characterized in that** the complementary cam surface (29) is a continuation of the cam surface (13) past the activation position, towards the stop position.

## Patentansprüche

1. Elektro-Haushaltsgerät (1) mit:
- zwei Plattenteilen (2), die miteinander zwischen einer Öffnungsposition und einer Schließposition gelenkig verbunden sind und in Richtung ihrer Öffnungsposition natürlich belastet werden,
- einem Riegel (6), der zwischen einer Entriegelungsposition und einer Verriegelungsposition, in welcher der Riegel (6) die Plattenteile (2) in der Schließposition hält, beweglich ist, und
- einem Steuerglied (10), das zwischen einer Position am Anfang eines Zeitablaufs und einer Halteposition bewegbar ist und in Richtung seiner Halteposition durch ein Mitnahmeelement (30) natürlich belastet ist und mit dem Riegel (6) derart zusammen wirkt, dass, wenn sich das Steuerglied (10) zwischen seiner Position am Anfang eines Zeitablaufs und einer Position am Ende eines Zeitablaufs befindet, die zwischen der Position am Anfang des Zeitablaufs und der Halteposition liegt, sich der Riegel (6) in seiner Verriegelungsposition befindet, und wenn sich das Steuerglied (10) zwischen seiner Position am Ende des Zeitablaufs und einer Aktivierungsposition befindet, die zwischen der Position am Ende des Zeitablaufs und der Halteposition liegt, der Riegel (6) in Richtung seiner Entriegelungsposition mitgenommen wird, **dadurch gekennzeichnet, dass** dieses ein Blockierelement (22) aufweist, das zwischen einer automatischen Öffnungsposition und einer manuellen Öffnungsposition beweglich ist und mit dem Steuerglied (10) derart zusammen wirkt, dass, wenn das Steuerglied (10) aus seiner Position am Anfang des Zeitablaufs in Richtung seiner Halteposition mitgenommen wird, das Steuerglied (10) bis in seine Aktivierungsposition beweglich ist, wenn sich das Blockierelement (22) in seiner automatischen Öffnungsposition befindet, und das Steuerglied (10) bis in eine Ruheposition beweglich ist, in welcher sich der Riegel (6) in seiner Verriegelungsposition befindet, wenn sich das Blockierelement (22) in seiner manuellen Öffnungsposition befindet.

2. Elektro-Haushaltsgerät (1) nach Anspruch 1, **dadurch gekennzeichnet, dass** das Steuerglied (10) eine Nockenfläche (13) aufweist, mit welcher der Riegel (6) in Kontakt gelangen kann, wobei die Nockenfläche (13) so ausgebildet ist, dass sie den Riegel (6) aus seiner Verriegelungsposition in seine Entriegelungsposition mitnehmen kann, wenn das Steuerglied (10) aus seiner Position am Ende des Zeitablaufs in seine Aktivierungsposition mitgenommen wird.

3. Elektro-Haushaltsgerät (1) nach Anspruch 1 oder 2, **dadurch gekennzeichnet, dass** das Blockierelement (22) in seiner automatischen Öffnungsposition und in seiner manuellen Öffnungsposition stabil ist.

4. Elektro-Haushaltsgerät (1) nach Anspruch 3, **dadurch gekennzeichnet, dass** das Blockierelement (22) ein manuelles Steuerelement (26) umfasst, welches dessen Handhabung ermöglicht.

5. Elektro-Haushaltsgerät (1) nach einem der Ansprüche 1 bis 4, **dadurch gekennzeichnet, dass** das Steuerglied (10) eine zweite Nockenfläche (27) aufweist, mit weicher das Blockierelement (22) in Kontakt gelangen kann, wobei die zweite Nockenfläche (27) so ausgebildet ist, dass diese das Blockierelement (22) aus seiner manuellen Öffnungsposition in seine automatische Öffnungsposition mitnimmt, wenn das Steuerglied (10) aus seiner Ruheposition in seine Position am Anfang des Zeitablaufs mitgenommen wird.

6. Elektro-Haushaltsgerät (1) nach Anspruch 5, **dadurch gekennzeichnet, dass** ein Ende der zweiten Nockenfläche (27) eine Haltefläche (24) bildet, die mit dem Blockierelement (22) in der manuellen Öffnungsposition in Kontakt kommt, wenn sich das Steuerglied (10) in seiner Ruheposition befindet.

7. Elektro-Hausgerät (1) nach Anspruch 1 oder 2, **dadurch gekennzeichnet, dass** das Blockierelement (22) in seiner automatischen Öffnungsposition belastet ist.

8. Elektro-Hausgerät (1) nach einem der Ansprüche 1 bis 7, **dadurch gekennzeichnet, dass** das Blockierelement (22) entlang einer Nut verschiebbar montiert ist, die in der Platte (2) ausgebildet ist, auf welcher das Steuerglied (10) montiert ist.

9. Elektro-Haushaltsgerät (1) nach Anspruch 7, **dadurch gekennzeichnet, dass** das Blockierelement (22) eine elastisch verformbare Zunge (22) ist.

10. Elektro-Haushaltsgerät (1) nach Anspruch 3 oder einem der Ansprüche, die davon abhängig sind, **dadurch gekennzeichnet, dass**, wenn sich das Blockierelement (22) in seiner automatischen Öffnungsposition befindet, das Steuerglied (10) bis in seine Aktivierungsposition beweglich ist, die seine Halteposition ist, und wenn sich das Blockierelement (22) in seiner manuellen Öffnungsposition befindet, das Steuerglied (10) bis in seine Ruheposition beweglich ist, die seine Position am Ende des Zeitablaufs ist.

11. Elektro-Haushaltsgerät (1) nach Anspruch 10, **dadurch gekennzeichnet, dass**, wenn sich das Steuerglied (22) in seiner manuellen Öffnungsposition befindet, an dieses das Steuerglied (10) anstößt, wenn sich letzteres in seiner Position am Ende des Zeitablaufs befindet.

12. Elektro-Haushaltsgerät (1) nach einem der Ansprüche 1 bis 9, **dadurch gekennzeichnet, dass**, wenn sich das Steuerglied (22) in seiner automatischen Öffnungsposition befindet, das Steuerglied (10) bis in seine Aktivierungsposition beweglich ist, und, wenn sich das Blockierelement (22) in seiner manuellen Öffnungsposition befindet, das Steuerglied (10) bis in seine Ruheposition beweglich ist, die seine Halterposition ist.

13. Elektro-Haushaltsgerät (1) nach Anspruch 12, **dadurch gekennzeichnet, dass**, wenn sich das Blockierelement (22) in seiner automatischen Öffnungsposition befindet, ein Anschlagelement (28) an dieses anschlägt, wenn sich das Steuerglied (10) in seiner Aktivierungsposition befindet.

14. Elektro-Haushaltsgerät (1) nach Anspruch 13, **dadurch gekennzeichnet, dass** das Anschlagelement (28) so ausgebildet ist, dass dieses das Blockierelement (22) in seine manuelle Öffnungsposition mitnimmt, wenn das Steuerglied (10) aus seiner Aktivierungsposition in seine Halterposition mitgenommen wird, und zwar mit einer vorbestimmten Energie, die größer ist als diejenige, die das Blockierelement (22) erhält, wenn das Steuerglied (10), belastet durch das Mitnahmeelement (30), in seiner Aktivierungsposition anschlägt.

15. Elektro-Haushaltsgerät (1) nach Anspruch 13 oder 14, **dadurch gekennzeichnet, dass** das Anschlagelement (28) an dem Steuerglied (10) befestigt ist, wobei das Blockierelement (22) an der Platte abgestützt ist, welche das Steuerglied (10) trägt.

16. Elektro-Haushaltsgerät (1) nach einem der Ansprüche 12 bis 15, **dadurch gekennzeichnet, dass** das Steuerglied (10) eine komplementäre Nockenfläche (29) aufweist, mit welcher der Riegel (6) in Kontakt gelangen kann und die so ausgebildet ist, dass sie den Riegel (6) aus seiner Verriegelungsposition in seine Entriegelungsposition mitnimmt, wenn das Steuerglied (10) aus seiner Halteposition in seine Aktivierungsposition mitgenommen wird.

17. Elektro-Haushaltsgerät (1) nach Anspruch 16, **dadurch gekennzeichnet, dass** die komplementäre Nockenfläche (29) die Nockenfläche (13) über die Aktivierungsposition hinaus in Richtung der Halterposition verlängert.
